(19) Europäisches Patentamt

European Patent Office

Office européen des brevets

(11) **EP 1 256 094 B1**

(12) **EUROPEAN PATENT SPECIFICATION**

(45) Date of publication and mention
of the grant of the patent:
**17.11.2004 Bulletin 2004/47**

(51) Int Cl.[7]: **G06K 19/06**, G06K 7/08,
G06K 7/016

(21) Application number: **01904237.3**

(22) Date of filing: **05.02.2001**

(86) International application number:
**PCT/HU2001/000012**

(87) International publication number:
**WO 2001/057791 (09.08.2001 Gazette 2001/32)**

(54) **TICKET PROVIDED WITH A MAGNETIC LAYER, AND A CORRESPONDING APPARATUS FOR TICKET EMISSION, VALIDATION AND INSPECTION**

KARTE MIT MAGNETISCHER STREIFE UND VORRICHTUNG ZUR HERSTELLUNG VON KARTEN, ÜBERPRÜFUNG UND INSPEKTION

TICKET DOTE D'UNE COUCHE MAGNETIQUE, ET APPAREIL D'EMISSION, DE VALIDATION ET D'INSPECTION DE TELS TICKETS

(84) Designated Contracting States:
**AT BE CH CY DE DK ES FI FR GB GR IE IT LI LU MC NL PT SE TR**

(30) Priority: **04.02.2000 HU 0000511 P**

(43) Date of publication of application:
**13.11.2002 Bulletin 2002/46**

(73) Proprietors:
• **Gajdàr, Tibor**
**1147 Budapest (HU)**
• **RACZ, Gábor**
**1024 Budapest (HU)**

(72) Inventors:
• **Gajdàr, Tibor**
**1147 Budapest (HU)**

• **Suomelidis, Alexandros**
**1112 Budapest (HU)**
• **Racz, Gábor**
**1024 Budapest (HU)**

(74) Representative: **Lantos, Mihaly**
**Danubia Patent &**
**Trademark Attorneys**
**P.O.Box 198**
**1368 Budapest (HU)**

(56) References cited:
**EP-A- 0 671 773            FR-A- 2 767 218**
**US-A- 3 864 754            US-A- 4 172 554**

## Description

The invention relates to a ticket provided with a magnetic layer that comprises information by means of the state of magnetization of the layer, which is made on a thin carrier in the form of a stripe extending along a direction of the carrier. The invention relates also to a ticket issuing, ticket validating and ticket controlling apparatus.

Tickets are conventionally used in public transport for permitting participation and as a receipt and certificate verifying that the owner of the ticket is authorized to use predetermined transport means at predetermined areas and within given time limits and in given cases under further limitations.

The use of tickets extends well beyond public transport and it includes an ever increasing range of different services, e.g. as participation permits at different sports events or as entry permit to theatres, cinemas and museums, and as entry passes to hotels, etc. According to their way of use tickets can be grouped as those permitting single participation in a service and multiple use tickets allowing several use of predetermined services with certain limitations. Single tickets become invalid after single use and they can be discarded, multiple use tickets have to be retained for further use.

The ticket according to the present invention covers all of the above kinds of types, however, its advantages will be apparent already in case of single tickets.

State of the art uses of tickets cover a large number of aspects and requirements. The complexity and price of certain uses as well as their scope of acceptance are all determined by the extent how the requirements are satisfied. In the following the range of such requirements will be examined. For the sake of simplicity the survey will relate to tickets used in transportation, but similar requirements might be applicable to tickets used in fields different from transportation.

The characteristics of tickets used in public transport include that the ticket indicates or comprises the following information. The type of the service that can be used (e.g. Public Transport Enterprise of Budapest), the description of the service itself (e.g. travel permit), limitations of the service (e.g. one hour counted from the beginning of the trip, the class of service, the passage through one or more sections or zones, the possibility of transfers, reduced rate periods e.g. weekends or off-peak travels) and finally data regarding the ticket holder or passenger (e.g. full fare ticket, children's ticket, senior or other reduced rate ticket). The passenger must buy the ticket before participation in the transport and has to validate it immediately preceding such use. The ticket must be capable of being controlled during the full time when the services are used, and in several kinds of uses the passenger can leave the area of service upon showing a valid ticket, which is then controlled.

By using the information stored on single tickets there is a possibility for obtaining traffic and travel statistic information if such stored information are processed electronically by using the computing capacity of the service providers. The purchase of tickets can be connected with the use of credit cards and with the use (and control) of a number of special reduced rate policies.

By using single "electronic" tickets the way opens to other complementary services, e.g. sanctioning if the use has been more extensive than permitted by the obligation of paying excess fares, or in case of a multiple zone transportation system by permitting the use in several zones within a given period.

A main characteristic of the single ticket is the cost of manufacture. Such tickets may cost only a small fraction of the cost of using the service. The cost of use includes the cost of the ticket issuing, ticket validating and ticket controlling apparatus. Within the area of service a large number of such apparatus is required, although all of such apparatuses can be used at unlimited number of occasions. The cost of a given system is determined by the price of making the single tickets and those of the apparatuses used in the system.

The operations connected with single tickets include the issuance of the ticket, the validation of the ticket at the beginning of the first use, in given case revalidation at a transfer, the control during the use of the services. The granting of a walk-out permit when the ticket holder wishes to leave the service area, and finally the disposal of the used ticket can also be required. The listed operations can be combined.

The listed operations can be carried out only if predetermined information can be recorded on the ticket, if the ticket can be read out several times and if further information can be recorded during use (predominantly at validation).

Single or multiple tickets are known that satisfy all the above listed conditions, wherein the ticket is made of cardboard (i.e. from a paper base material) and on a face of the ticket at least one stripe is provided made of a magnetic material. The recording of magnetic information takes place according to conventional magnetic recording methods. Under conventional recording methods ways are understood how information is recorded on magnetic tapes or on flexible or hard disk carriers. A common characteristic of such recording ways lies in that both at recording and reading the magnetic carrier passes in front of the air gap of a writing or reading head with a predetermined constant speed. In case of recording the magnetic field provided in the air gap closes through the magnetic material, which is magnetized in the direction of the movement. The remanent magnetic properties of the carrier store the recorded information. At reading operation the magnetic information passes in front of the air gap of the reading head and induces an electrical voltage in the coil encircling the air gap, and this voltage can be used following an appropriate amplification.

This classical recording and reading method has, however, a number of drawbacks, because both the recording and reading operation requires that the carrier be moved with a uniform speed. Machine-guided movements can provide this only. There have been trials for making reading devices wherein the ticket movement occurred by the manual insertion or removal of the ticket in a ticketing machine, these solutions have not been reliable because the reading was largely dependent on the speed and on its uniformity. Among the requirements imposed on the ticket the need for recording information has already been mentioned. In case of manual ticket movement such reading cannot take place in a reliable manner.

The main limitations of ticket systems used in public transport is not determined by the manufacturing cost of the ticket itself, but by the high costs of the ticketing apparatus (that includes issuance, validation and control). Such ticketing systems can be economic only at large number of users or at larger service providers with high traffic density. Typical examples for such large systems are the ticketing system used at the London Underground or at the Paris Metro. The system used at the Metro of Washington DC is more advanced than the earlier mentioned ones because it prints the remaining usable amount on the ticket that can be read by naked eye. In case of a negative amount it is permitted that fare be added before the passenger can leave the service area.

The ticket issuing and validating machines must be able to read the information recorded on the magnetic carrier of the ticket and to record information thereon. A further requirement that reliable operation must be retained also in extreme whether conditions, since the machines must operate 24 hours a day at different locations of the service network area (in many cases when being under the free sky). The information that must be recorded on the ticket should be at least 64 bit long.

In the actually used systems the ticketing machines comprise moving components for ensuring the required uniform speed. The need of using moving components increases price and decreases reliability. In view of the high costs the number of such sophisticated systems is rather limited, and it becomes economically justified only in case of users of substantial size and/or services being rather expensive.

FR 2 767 218, discloses a magnetic code and a reading system, wherein information is recorded in the form of printed bars of magnetizable material arranged like customary bar codes, and a predetermined number of bar positions define a character. The character positions follow each other in a regular form, and a separate synchronizing area is associated with the information carrying area, wherein a synchronizing bar is arranged for each character. The synchronization has the purpose of designating the beginning of the first bar in the sequence defining the associated character. This system is less appropriate for being used for ticket applications, since the limited size of the ticket does not allow recording the required amount of information, and the recording of information cannot take place in a pure electronic way. The magnetic material of the bars is not magnetized in either direction.

EP 0 671 773 relates to a Hall element for detecting a magnetic field, and which has electrodes formed on a surface and which is capable of detecting a magnetic field in a direction perpendicular to the magnetic surface.

The object of the invention is to provide a ticket and a corresponding ticketing apparatus that provides perfect reading and recording without requiring the movement of the ticket with any predetermined and uniform speed. A further object is that the apparatus does not have to comprise moving elements.

In meeting the above objects it has been recognized that the dependence of the magnetically recorded information from the speed will cease to exist, if the direction of information recording will not be parallel to the plane of the carrier but normal thereto. The orientation of the information i.e. synchronization can be provided if the ticket comprises a separate synchronizing stripe.

According to the invention the direction normal to the carrier involves not only the direction which closes a right angle in geometrical sense but all cross magnetized directions that can ensure recording and reading without the explained problems of speed and uniformity, i.e. directions that have a component normal to the plane of the carrier.

According to the invention a ticket has been provided for insertion and removal into and from a reading and/or writing apparatus which is designed as defined in the attached claims 1 to 4.

The invention also includes an apparatus for reading magnetic information recorded on the ticket and the apparatus is defined in claims 5 to 7.

The present invention renders the use of moving parts in the ticketing apparatus unnecessary and substantially decreases thereby the manufacturing costs and increases reliability.

The ticket and ticketing apparatus according to the invention will now be described in connection with preferable embodiments thereof, wherein reference will be made to the accompanying drawings. In the drawing:

Fig. 1 is a schematic view of prior art signal recording;

Fig. 2 is an explanatory sketch for the creation of Hall effect;

Fig. 3 is the general scheme of the magnetic recording according to the invention;

Fig. 4 shows how optical and magnetic signals are recorded on a paper-based carrier; and

Fig. 5 is the functional block diagram of the apparatus according to the invention.

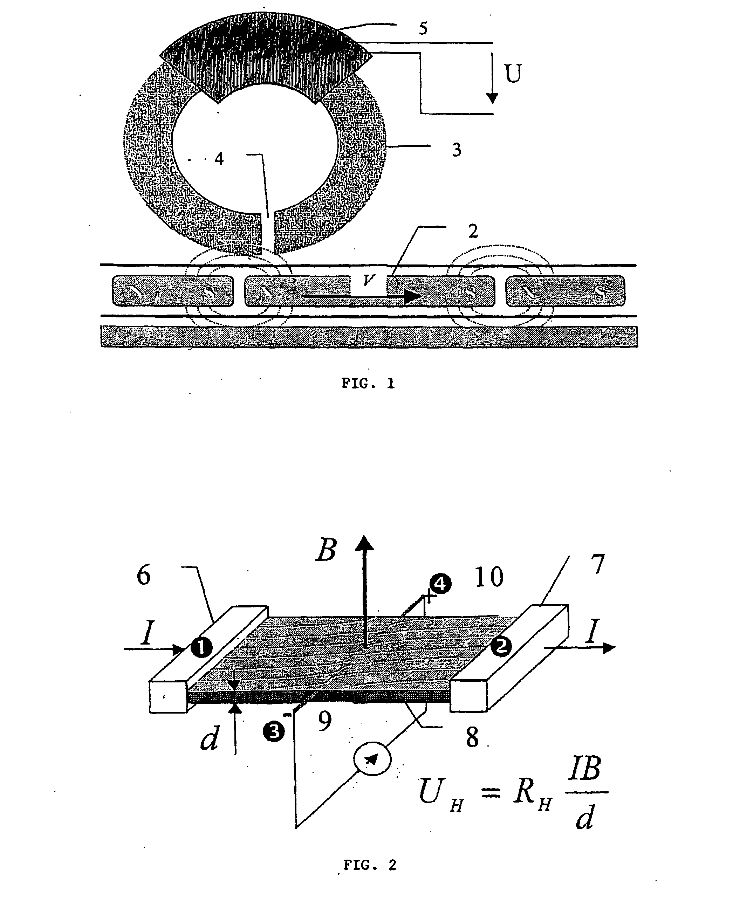

Fig. 1 shows a conventional signal recording on a magnetic stripe, wherein the cross-section of a magnetic layer 2 is shown on a cardboard carrier 1. For the sake of better illustration, the thickness of the magnetic layer 2 is exaggerated. A recording head 3 is arranged above the magnetic layer 2 that has a body made of magnetic material defining an air gap 4 extending in parallel with the surface of the carrier 1. The recording head 3 is magnetized by a current flowing through coil 5 generated by voltage U applied on the coil 5. The carrier 1 together with the magnetic layer 2 thereon is moved with a uniform velocity v in the direction of the arrow shown, and the movement is parallel with the plane of the carrier 1. The magnetic field is closed at the vicinity of the air gap 4 through the magnetic layer 2, magnetizing its elementary magnetic domains in the direction of the movement. The recording is digital i.e. ones and zeros are recorded in such a way that each of the recorded digits is associated with a magnetization of the magnetic layer 2 in one or the opposite direction at a predetermined length of the carrier. The letters N and S designates the north and south poles of the elementary magnets, respectively. Depending on the actual design and parameters of the recording head 3 the length of the smallest information unit can be determined, and in the knowledge of the full length of the carrier 1 the number of useful recordable information expressed in bit units can be determined. In case of a ticket of average size about 64 to 128 bits can be stored.

Fig. 2 illustrates how the Hall effect takes place. If a plate 8 made of an electrically conductive material (e.g. by a semiconductor) with a thickness d is pressed between two electrodes 6, 7 both extending normal to the plane of the plate 8, and current I is passed between the electrodes 6, 7 and the plate 8 is placed in a magnetic field with an induction B, then between the faces 9, 10 of the plate 8 which extend normal to a plane defined by the direction of the flow of the current I and of the magnetic field B, a Hall voltage $U_H$ is generated, and its value can be expressed by the formula:

$$U_H = R_H \, I \, B / d.$$

The Hall voltage is static i.e. it takes place even if the elements take a fixed (static) position. The Hall effect has long been known, and it is utilized in case of a high number of electronic sensing devices, which are predominantly capable of measuring or detecting static (or slowly changing) magnetic fields. Such devices are e.g. the Hall detectors of types KSY10, KSY13 and KSY14 manufactured by Siemens AG Germany. These devices have a GaAs chip with a size of about .2 x .2 mm and it is arranged in a non-magnetic case. The device has four terminals of which two serves for the connection of the supply voltage, and the other two leads out the Hall voltage.

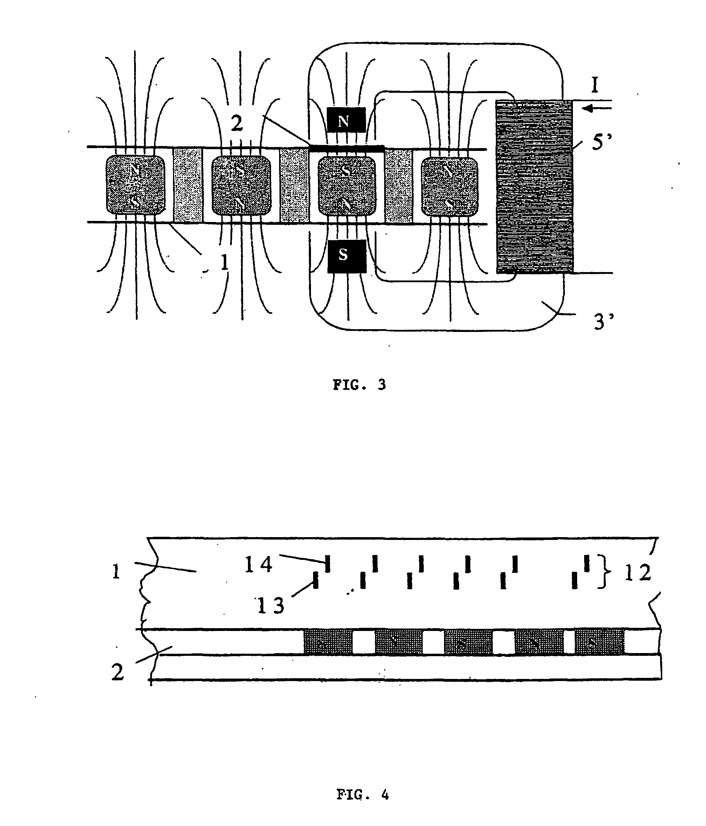

Reference is made now to Fig. 3 showing schematically the signal recording that can be used for the present invention. The cardboard carrier 1 which represents the ticket itself, is provided with a narrow longitudinal stripe constituted by a magnetic layer 2 that takes a raster form. The ticket is inserted in the ticketing machine by a movement normal to the plane of the drawing, and its removal occurs in opposite direction. The signal recording uses a recording head 3' with a core defining a comparatively wide air gap, and the carrier 1 with the magnetic layer 2 thereon is inserted transversally in the air gap. At the rear side of the core a coil 5' is arranged, and a current +I or -I can be passed through the coil corresponding to the value of the digital information to be recorded, and the magnetic field of this current magnetizes the air gap in transversal direction. In contrast to the arrangement of Fig. 1, the magnetic field is normal to the plane of the magnetic layer 2. The magnetization remaining after the field has been terminated will also be normal to the plane of the plate, and its sense depends on the content of the recorded information. By such an arrangement if a Hall detector is placed on the magnetic layer 2 and the sensor chip of the detector extends in parallel to the plane of the carrier 1, a direct voltage is generated in the detector. The sense of this voltage depends on the value of the recorded information. The Hall voltage has a static character; thus its value does not depend on the speed of movement of the carrier 1 relative to the detector, as it was the case in the arrangement of Fig. 1. For decreasing the disturbing effects acting on the Hall detector used for reading, the use of a pair of Hall detector in differential circuit arrangement can be suggested. Furthermore, the reading Hall detectors should be arranged possibly far away from the recording head so that its strayed magnetic field cannot disturb the reading. The size of the tickets in longitudinal direction is sufficient for providing a suitable spacing.

Reference will now be made to Fig. 4 showing an enlarged portion of the surface of the ticket. The magnetic layer 2 extends along the full length of the carrier 1, and the layer 2 takes the form of a magnetic stripe or raster-stripe made by spreading or printing a magnetic material on the surface. In case of the known recording method explained in Fig. 1 the magnetic layer 2 has to be continuous in longitudinal direction, such a continuity is not required at the present invention, since the elementary magnetic information pieces are stored in thin spaced fields which form a raster of discrete spots. In Fig. 4 the designations S and N show the magnetic states of the upper faces of the elementary magnetized spots in case of an exemplary recorded information. If the magnetic layer 2 is not made to form a continuous stripe but from a sequence of discrete spaced spots, then the spacing between subsequent spots can be decreased compared to that required in case of a continuous stripe, because the non-magnetic spaces decrease the magnetic coupling between neighboring spots. Naturally, the invention functions equally well in case of a continuous stripe if a sufficient spacing is provided between neighboring spots.

A further feature of the structure shown in Fig. 4 is the presence of a second, synchronizing stripe 12 on the surface of the carrier 1 in addition to the magnetic layer 2. In this stripe 12 at locations corresponding to the respective magnetic spots respective pairs of synchronizing lines 13, 14 are provided. The lines 13 and 14 are slightly displaced in longitudinal direction. The lines in the synchronizing stripe 12 can be made by printing, and in that case the lines 13 and 14 can be observed visually, and their machine-reading can take place by respective optical readers being slightly displaced from one another At an alternative embodiment the synchronizing stripe 12 is also a magnetic stripe so that the synchronizing lines 13, 14 are predetermined fix lines made of a magnetic material, also with transversal magnetization. Their reading requires the use of further Hall readers.

The synchronizing stripe 12 and the associated synchronizing lines 13 and 14 are required to make the information reading and writing operations of the information carrier magnetic layer 2 independent from the speed of insertion or removal of the ticket, and from the uniform nature of such speed. If the lines of the synchronizing stripe 12 are counted at the insertion of the ticket, and the moments are sensed when during the movement of the ticket any particular line passes a predetermined position, then the number of the magnetic spot which is just in front of the reading (or) writing head will also be known. The reason of using two offset synchronizing lines 13, 14 in association with each recording position is to enable establishing the direction of movement of the ticket. If during a reading operation first the line 14 and thereafter the line 13 are sensed, then the ticket moves towards the interior of the device, thus at the next raster position the value of the position counter should be increased. If the order of detection of the lines 13 and 14 is opposite, the ticket is being removed and the counter should be decreased at each subsequent position. By using the synchronizing lines the movement of the ticket can occur at any speed and in any direction.

For finishing the ticketing operation the full reading of the ticket is required i.e. the raster counter must reach the value corresponding to the highest useful recording spot.

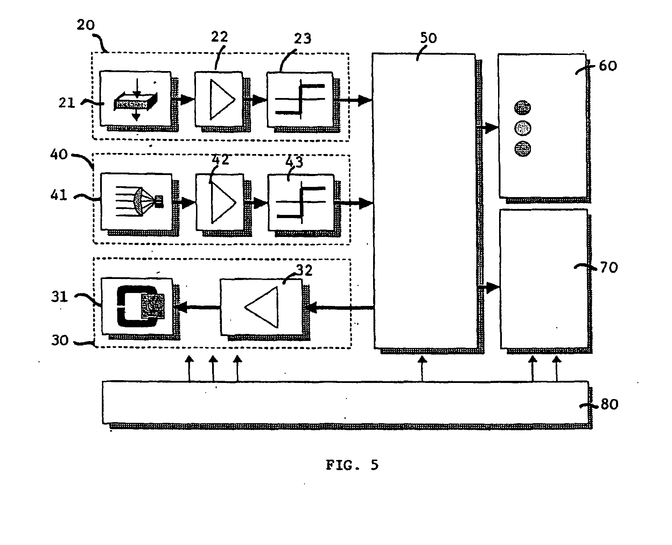

Fig. 5 shows the functional block diagram of the ticketing apparatus according to the invention. In the apparatus three active units get into contact with the ticket. The first of them is a Hall detector unit 20 that comprises sensors 21 arranged above the magnetic stripe or layer 2, amplifier 22 coupled to the output of the sensors 21 and a waveform corrector 23. The second unit is a recording unit 30 that comprises a recording head 31 made as shown in Fig. 3 and amplifier 32 for the control thereof. The third one is an optical detection unit 40 that comprises for each stripe of lines respective optical sensors 41, amplifiers 42 and waveform correctors 43 coupled to one another. All of these three units are connected to an intelligent control logic 50 that knows the information that can and should be contained in the ticket and comprises the earlier referred counter and a logic recognizing the direction of ticket movement, and the logic 50 is capable of evaluating the authentic nature of the ticket and it is coupled preferably to a local display 60 and, if required, through an interface 70 to a central processing unit. The control logic 50 comprises additionally a real time clock providing time signals for determining the time limitations of the ticket. A power supply 80 is used to provide the required stabilized voltages for the units in the apparatus.

According to the invention the magnetic information recorded on the ticket has been modified in a substantial way compared to conventional recording technique, since neither the writing nor the reading depends on the speed of ticket insertion or removal, furthermore the direction of magnetization is normal to the plane of the ticket enabling the use of Halls sensors. The monitoring of the momentary position of the ticket by means of the synchronizing stripe renders the use of automated ticket movement unnecessary, and such moving devices were the most expensive and less reliable components of conventional ticketing machines, which can now be spared. Thereby the price of such machines becomes much lower and their reliability much higher. The lower price and smaller dimensions substantially enhance the field of application for intelligent tickets, and the system with all its enhanced features will be available for smaller users and service providers.

The present invention cannot be limited to the use of tickets in the narrow meaning of the term, because when seen from the point of view of the present invention, the reading and recording of the magnetic information of credit or debit cards takes place in a similar way as in case of tickets. From the aspect of the invention it has only significance that the reading of the magnetic stripe recorded on the card does not require the use of a separate moving device, and the reliability of manual movement will improve by means of the synchronization as described above.

**Claims**

1. A ticket for insertion and removal into and from a reading and/or writing apparatus, said ticket comprises a thin carrier (1) of a non-magnetic material defining a plane surface, an information storage magnetic layer (2) storing digital information in discrete magnetic spots, said magnetic layer (2) is made in the form of a stripe provided on said surface of the carrier (1) and extending along the length thereof, and a synchronizing stripe (12) extending in parallel with said information storage stripe and having synchronizing lines (13, 14) of optically and/or magnetically readable material to synchronize the position of said information storage spots in said magnetic layer (2), **characterized in that** the two possible states of said digital information is represented by opposite senses of the direction of magnetization of said spots, wherein said direction has a component normal to said plane surface of the carrier (1), and respective synchronizing lines (13, 14) each being associated with a respective one of said discrete magnetic spots.

2. The ticket as claimed in claim 1, **characterized in that** said synchronizing lines (13, 14) being printed on said carrier (1) and extend in transversal direction of said synchronizing stripe (12) and said lines being recognizable by means of an optical reader (41).

3. The ticket as claimed in claim 1, **characterized in that** said synchronizing lines (13, 14) of the synchronizing stripe (12) being constituted by magnetic sections magnetized to have a magnetic component normal to the plane of said carrier (1).

4. The ticket as claimed in claim 1, **characterized in that** said synchronizing stripe (12) consists of two sets of synchronizing lines (13 and 14) being slightly offset from each other in the direction of the stripe to enable sensing the direction of movement.

5. Apparatus for reading magnetic information recorded on the ticket according to claim 1, **characterized by** comprising:

   a Hall detector (21) arranged in front of said magnetic layer (2) of the ticket and reading the sense of said normal component of the magnetic field;
   and a further sensor (41) arranged in front of said synchronizing stripe (12) and capable of detecting and counting synchronizing lines (13, 14) of said stripe (12), said counted values constituting respective serial numbers for said discrete spots enabling correct interpretation of said stored information.

6. The apparatus as claimed in claim 5, **characterized by** said further sensor (41) comprising a pair of said detectors slightly offset from each other in the direction of the ticket movement, both counting one in each pair of associated synchronizing lines (13, 14), and said counter counting in upward or downward direction depending on the order of reaching the first or second ones of the synchronizing lines (13, 14) in the pair.

7. The apparatus as claimed in claim 5 capable of writing information on the magnetic layer (2) of the ticket, **characterized by** comprising additionally a magnetic recording head (31) arranged at a magnetically remote location from said Hall detector (21) at the path of movement of said magnetic layer (2) for recording digital information on said spots so that the recorded magnetic field has a component normal to the plane of the layer (2).

**Patentansprüche**

1. Karte zum Einführen in und Entfernen aus ein/einem Lese- und/oder Schreibgerät, wobei die erwähnte Karte einen eine ebene Fläche bestimmenden dünnen Träger (1) aus unmagnetischem Material, eine digitale Informationen in diskreten magnetischen Bereichen speichernde magnetische Informationsspeicherschicht (2), welche magnetische Schicht (2) in Form eines auf der erwähnten Fläche des Trägers (1) vorgesehenen Streifens ausgebildet ist und sich entlang deren Länge dessen erstreckt, und einen Synchronisierungsstreifen (12) enthält, welcher sich zu dem erwähnten Informationsspeicherstreifen parallel erstreckt und zum Synchronisieren der Position der erwähnten Informationsspeicherbereiche in der erwähnten magnetischen Schicht (2) Synchronisierungslinien (13, 14) aus einem optisch und/oder magnetisch lesbarem Material enthält, **dadurch gekennzeichnet, dass** die zwei möglichen Zustände der erwähnten digitalen Information durch die entgegengesetzten Richtungssinne der Magnetisierung der erwähnten Bereiche repräsentiert sind, wobei die erwähnte Richtung eine zu der erwähnten ebenen Fläche des Trägers (1) normale Komponente aufweist, und jede der Synchronisierungslinien (13, 14) einem entsprechenden der erwähnten diskreten magnetischen Bereiche zugeordnet ist.

2. Karte nach Anspruch 1, **dadurch gekennzeichnet, dass** die erwähnten Synchronisierungslinien (13, 14) auf dem erwähnten Träger (1) aufgedruckt sind und sich in transversaler Richtung des erwähnten Synchronisierungsstreifens (12) erstrecken, wobei die erwähnten Linien mit Hilfe eines optischen Lesegerätes (41) erkennbar sind.

3. Karte nach Anspruch 1, **dadurch gekennzeichnet, dass** die erwähnten Synchronisierungslinien (13, 14) des Synchronisierungsstreifens (12) von magnetischen Abschnitten gebildet sind, welche so magnetisiert sind, dass sie eine zu der Ebene des erwähnten Trägers (1) normale magnetische Komponente aufweisen.

4. Karte nach Anspruch 1, **dadurch gekennzeichnet, dass** der erwähnte Synchronisierungsstreifen (12) durch zwei Sätze von Synchronisierungslinien (13 und 14) gebildet ist, welche in Richtung des Streifens geringfügig voneinander versetzt angeordnet sind, um die Richtung der Bewegung erfassen zu können.

5. Gerät zum Lesen von auf der Karte nach Anspruch 1 aufgezeichneten magnetischen Informationen, *dadurch gekennzeichnet,* **dass** es enthält:

einen Hall-Detektor (21), welcher vor der erwähnten magnetischen Schicht (2) der Karte angeordnet ist und den Richtungssinn der erwähnten normalen Komponente des Magnetfeldes liest;
und einen weiteren Sensor (41), welcher vor dem erwähnten Synchronisierungsstreifen (12) angeordnet ist und zum Detektieren und Zählen der Synchronisierungslinien (13, 14) des erwähnten Streifens (12) geeignet ist, wobei die erwähnten gezählten Werte entsprechende Laufnummern für die erwähnten diskreten Bereiche bilden und die korrekte Interpretation der erwähnten gespeicherten Informationen ermöglichen.

6. Gerät nach Anspruch 5, *dadurch gekennzeichnet,* **dass** der erwähnte weitere Sensor (41) ein Paar der erwähnten Detektoren enthält, die in der Richtung der Kartenbewegung voneinander geringfügig versetzt angeordnet sind, wobei beide in jedem Paar jeweils eine der zugeordneten Synchronisierungslinien (13, 14) zählen, weiterhin der erwähnte Zähler in Abhängigkeit von der Reihenfolge der Erreichung der in dem Paar befindlichen ersten oder zweiten der Synchronisierungslinien (13, 14) in Vorwärts- oder Rückwärtsrichtung zählt.

7. Gerät nach Anspruch 5, welches zum Schreiben von Informationen auf die magnetische Schicht (2) der Karte geeignet ist, *dadurch gekennzeichnet,* **dass** es zusätzlich einen magnetischen Aufzeichnungskopf (31) enthält, welcher auf der Bewegungsbahn der erwähnten magnetischen Schicht (2) von dem Hall-Detektor (21) an einer magnetisch entfernten Stelle zum Aufzeichnen von digitalen Informationen auf die erwähnten Bereiche angeordnet ist, wobei das aufgezeichnete Magnetfeld eine zur Ebene der Schicht (2) normale Komponente enthält.

**Revendications**

1. Ticket pour insertion dans et enlèvement d'un appareil de lecture et/ou d'écriture, ce ticket contenant un support (1) mince de matière non magnétique définissant une surface plane, une couche magnétique (2) pour mémoriser des informations digitales dans des lieux magnétiques distincts, cette couche magnétique (2) étant réalisée sous la forme d'une bande sur la surface du support (1) s'étendant le long de ce support (1), et une bande de synchronisation (12) s'étendant parallèlement à la dite bande mémorisant des informations et contenant des lignes de synchronisation (13, 14) de matière lisible optiquement ou magnétiquement pour synchroniser la position des lieux mémorisant des informations dans la couche magnétique (2), **caractérisé en ce que** les deux états possibles de l'information digitale sont représentés par les sens opposés d'orientation de la magnétisation des lieux mémorisant des informations, et cette direction a une composante normale à la surface plane du support (1) et chacune des lignes de synchronisation (13, 14) respectives est associée à l'un des lieux magnétiques distincts.

2. Ticket selon la revendication 1, **caractérisé en ce que** les lignes de synchronisation (13, 14) sont pressées sur le support (1) et s'étandent dans la direction transversale de la bande de synchronisation (12), et les lignes de synchronisation (13, 14) sont reconnaissables par un lecteur optique (41).

3. Ticket selon la revendication 1, **caractérisé en ce que** les lignes de synchronisation (13, 14) de la bande de synchronisation (12) sont constituées par des sections magnétiques qui sont magnétisées de la manière qu'elles aient une composante magnétique normale au plan du support (1).

4. Ticket selon la revendication 1, **caractérisé en ce que** la bande de synchronisation (12) se compose de deux jeux de lignes de synchronisation (13 et 14) qui sont déplacées légèrement l'une de l'autre dans la direction de la bande (12) pour pouvoir détecter la direction du mouvement.

5. Appareil pour lire des informations magnétiques enregistrées sur un ticket selon la revendication 1, **caractérisé en ce que** l'appareil comprend

un senseur Hall (21) arrangé en face de la couche magnétique (2) du ticket et capable de lire le sens d'orientation du composant normal du champ magnétique ;
et un senseur (41) supplémentaire arrangé en face de la bande de synchronisation (12) étant capable de détecter et compter les lignes de synchronisation (13, 14) de la bande de synchronisation (12), où les valeurs comptées constituent les numéros ordinaux respectifs pour les lieux magnétiques distincts permettant l'interprétation correcte des informations mémorisées.

6. Appareil selon la revendication 1, **caractérisé en ce que** le senseur (41) supplémentaire comprend une paire de détecteurs étant déplacés légèrement l'un de l'autre dans la direction du mouvement de ticket, chaque détecteur comptant l'une des lignes de chaque paire de lignes de synchronisation (13, 14) associées, ces détecteurs pouvant compter dans la direction montante ou descendante en fonction qu'ils atteignent la première ou la seconde de lignes de synchronisation (13, 14) de la paire.

7. Appareil selon la revendication 5, étant capable d'écrire des informations sur la couche magnétique (2) du ticket, **caractérisé en ce que** l'appareil comprend en plus une tête d'enregistrement magnétique (31) arrangée dans un lieu magnétiquement éloigné du senseur Hall (21) dans le trajet de mouvement de la couche magnétique (2) pour enregistrer des informations digitales dans les lieux distincts mémorisant des informations, de façon que le champ magnétique enregistré ait un composant normal au plan de la couche magnétique (2).

FIG. 1

$$U_H = R_H \frac{IB}{d}$$

FIG. 2

FIG. 3

FIG. 4

FIG. 5